# NEUE EUROPÄISCHE PATENTSCHRIFT

(11) **EP 1 905 497 B2**
(45) Veröffentlichungstag und Bekanntmachung des Hinweises auf die Entscheidung über den Einspruch: **18.09.2019**
(45) Hinweis auf die Patenterteilung: 29.08.2012
(21) Anmeldenummer: 07113436.5
(22) Anmeldetag: 30.07.2007
(51) Int. Cl.: B01D 29/11, B01D 46/02

(54) **Filtereinrichtung**
Filter device
Dispositif de filtre

(30) Priorität: 27.09.2006 DE 202006014962 U
(43) Veröffentlichungstag der Anmeldung: 02.04.2008
(73) Patentinhaber: MANN+HUMMEL GmbH, 71636 Ludwigsburg (DE)
(72) Erfinder: Walz, Stefan, 71691 Freiberg (DE); Vogt, Mirja, 72649 Wolfschlugen (DE); Schütz, Steffen, 74321 Bietigheim-Bissingen (DE)
(74) Vertreter: Maiwald Patent- und Rechtsanwaltsgesellschaft mbH

(56) Entgegenhaltungen:
- EP-A- 0 459 163
- WO-A-96/23571
- DE-U1- 8 711 134
- US-A- 4 003 836
- US-A- 4 427 547
- US-A- 4 500 332
- US-A- 5 106 397
- US-A- 5 888 260
- US-A1- 2004 020 843
- US-B1- 6 179 890

## Beschreibung

### Technisches Gebiet

Die Erfindung bezieht sich auf eine Filtereinrichtung, insbesondere zur Filterung von Verbrennungsluft in Brennkraftmaschinen, nach dem Oberbegriff des Anspruches 1.

### Stand der Technik

Die WO 96/23571 A zeigt eine Filtereinrichtung mit einem flexiblen zylindrischen Fluidrohr und einem darin angeordneten Filtereinsatz. Es sind verschiedene Ausführungsformen des Filterelementes gezeigt, die in dem zylindrischen Fluidrohr angeordnet sein können.
Im Dokument US 4 427 547 A wird ein Filterapparat beschrieben, der aus einem konisch zulaufenden Fluidrohr und einem darin angeordneten zylindrischen Filtereinsatz besteht. Der Filtereinsatz besteht aus einem inneren Stützkäfig und einem außen am Stützkäfig angeordneten Gewebe.
Das Dokument DE 87 11 134 U1 offenbart einen Flüssigkeitsfilter mit einem von außen nach innen durchströmbaren Filterkäfig. Der Filterkäfig ist konisch gestaltet und in einem im Wesentlichen zylindrischen Gehäuse angeordnet. In der DE 196 08 589 A1 wird ein konisch ausgebildetes Filterelement beschrieben, das von dem zu reinigenden Fluid radial von innen nach außen durchströmt wird. Das konische Filterelement ist in einen Stützkorb eingesetzt, welcher die Funktion eines Filtergehäuses hat und dem Filterelement die erforderliche Stabilität verleiht. Zur Filtrierung wird das Fluid axial in den die Rohseite darstellenden Innenraum des Filterelementes eingeführt und durchströmt von dort radial die Filterwandung. Die Konizität des Filterelementes hat den Vorteil, dass die Beschädigungsgefahr bei der Montage und Demontage minimiert wird und das Filterelement leichter ausgetauscht werden kann.

### Offenbarung der Erfindung

Von diesem Stand der Technik ausgehend liegt der Erfindung die Aufgabe zugrunde, eine Filtereinrichtung mit einem in ein Filtergehäuse eingesetzten Filterelement zu schaffen, das von dem zu reinigenden Fluid radial zu durchströmen ist, wobei sich die Filtereinrichtung durch eine verbesserte Filtrationsleistung auszeichnen soll.

Diese Aufgabe wird erfindungsgemäß mit den Merkmalen des Anspruches 1 gelöst. Die Unteransprüche geben zweckmäßige Weiterbildungen an.

Die erfindungsgemäße Filtriereinrichtung weist ein schlauchförmiges Filterelement auf, dessen Filterwandung die Rohseite von der Reinseite radial separiert, so dass das Filterelement radial von dem zu reinigenden Fluid zu durchströmen ist. Teil des Filtergehäuses ist ein Rohfluidrohr, über das das Fluid herangeführt wird und in dem das Filterelement in Achsrichtung verlaufend positioniert ist. Das Rohfluidrohr weist zumindest axial abschnittsweise einen größeren Innendurchmesser auf als der maximale Außendurchmesser des Filterelementes, so dass zwischen Außenmantel des Filterelementes und Innenmantel des Rohfluidrohrs ein Ringraum gegeben ist, der zugleich einen Strömungsraum für das Fluid bildet. Dieser Ringraum besitzt in Achs- bzw. Strömungsrichtung eine sich ändernde Querschnittsfläche, wobei in die Wandung des Fluidrohrs Stufen eingebracht sind, so dass sich der Ringraum in Achsrichtung gesehen stufenförmig verjüngt und die Stufen abgeflacht verlaufen.

Mithilfe dieser Konfiguration werden verschiedene Vorteile erzielt. Der Ring- bzw. Strömungsraum mit der sich in Strömungsrichtung ändernden Querschnittsfläche bewirkt eine Änderung der Druckverhältnisse im strömenden Fluid, wodurch insbesondere die Strömung des Fluids in Radialrichtung beeinflusst wird. Diese Strömungsverhältnisse können für eine verbesserte radiale Durchströmung des Filterelementes durch eine gleichmäßigere axiale Verteilung ausgenutzt werden, wodurch sich die Filtrationsleistung des Filterelementes verbessert. Insbesondere bei einer in Strömungsrichtung abnehmenden Querschnittsfläche des Ring- bzw. Strömungsraumes erhöht sich in Achsrichtung der Druck im Fluid, wodurch die radiale Strömung im Fluid unterstützt wird. Eine Verbesserung des Durchflusswiderstands wird durch eine optimierte Ausführung der Geometrie ebenfalls erreicht.

Die sich ändernde Querschnittsfläche im Ringraum kann mithilfe unterschiedlicher konstruktiver Maßnahmen erreicht werden. Möglich ist sowohl eine sich in Achsrichtung ändernde Geometrie des Rohfluidrohrs als auch eine sich in Achsrichtung ändernde Geometrie des Filterelementes, wobei als weitere, sich unterscheidende Alternativen die Geometrie des jeweils anderen Bauteils konstant gehalten werden oder aber sich ebenfalls ändern kann. Beispielsweise kann das Rohfluidrohr konisch ausgebildet sein und insbesondere in Strömungsrichtung sich verjüngen. Diese Geometrie des Rohfluidrohres kann kombiniert werden mit einem hohlzylindrischen Filterelement, welches in Achsrichtung einen konstant bleibenden Querschnitt aufweist. Der Querschnittsraum zwischen Außenmantel des hohlzylindrischen Filterelementes und Innenmantel des konisch spitz zulaufenden Rohfluidrohres verjüngt sich, so dass das Rohfluid, welches axial über den Ring- bzw. Strömungsraum herangeführt wird, einen zunehmenden, statischen Fluiddruck aufbaut, der die Strömung radial von außen nach innen durch die Wandung des Filterelementes unterstützt und begünstigt. Die Konizität führt zum einen zu einem reduzierten Druckverlust und verbessert zum anderen die Filterfunktionswerte. Das Durchtreten des herangeführten Fluids radial durch die Wandung des Filterelementes erstreckt sich im Vergleich zu Ausführungen aus dem Stand der Technik mit konstantem Ringraum über eine größere axiale Fläche, da der zunehmende Druck bereits zu einem radialen Durchströmen am axialen Beginn des Filterelementes führt.

In einer nicht erfindungsgemäßen Ausführung wird der grundsätzlich gleiche Vorteil auch mit umgekehrten geometrischen Verhältnissen erreicht, gemäß denen das Rohfluidrohr zylindrisch ausgeführt ist und das Filterelement in Achsrichtung eine konische Geometrie aufweist und sich in Strömungsrichtung konisch erweitert. Der Ringraum zwischen Außenmantel des konischen Filterelementes und Innenmantel des zylindrischen Rohfluidrohres verjüngt sich in gleicher Weise wie beim erstgenannten Ausführungsbeispiel, wodurch grundsätzlich die gleichen Strömungseffekte erzielt werden. Die Wahl der Geometrien kann unter anderem an die Einbau- und Platzverhältnisse angepasst werden, beispielsweise im Fall einer Verwendung der Filtereinrichtung zur Filtration von Verbrennungsluft in Brennkraftmaschinen an die Einbausituation im Motorraum des Kraftfahrzeuges.

Im Prinzip können auch beide Bauteile, also sowohl das Filterelement als auch das Rohfluidrohr, eine sich in Strömungsrichtung ändernde Geometrie aufweisen, solange gewährleistet bleibt, dass die Querschnittsfläche des Ringraumes sich in Strömungsrichtung ändert. Beispielsweise ist es möglich, beide Bauteile konisch auszubilden, jedoch mit unterschiedlichem Konuswinkel. Weist das Rohfluidrohr einen größeren und das Filterelement einen kleineren Konuswinkel auf, so ergibt sich in Strömungsrichtung ebenfalls ein Ringraum mit abnehmender Querschnittsfläche.

Das Filterelement ist bevorzugt als flexibler Filterschlauch aus einem weichen und nachgiebigen, vliesartigen Filtermaterial ausgebildet, das bevorzugt aus synthetischem Material besteht, welches insbesondere auf Polymerbasis hergestellt wird, oder aus natürlichem Material, beispielsweise aus Zellulosefasern. Die Flexibilität des Schlauches erlaubt sowohl eine Längenanpassung in Achsrichtung als auch eine Verformung in Radialrichtung. Der Schlauch kann eine glatte, faltenfreie Wandung aufweisen, oder, gemäß einer bevorzugten Ausführung, Falten besitzen, die über die axiale Länge des Schlauches angeordnet sind. Derartige Falten können ausschließlich in Längsrichtung orientiert sein, das heißt die Faltenkanten erstrecken sich ausschließlich in Längsrichtung, ungeachtet einer konischen oder zylindrischen Querschnittsgeometrie des Filterelementes. Möglich ist aber auch eine Faltenbildung in der Filterwandung mit einer Komponente der Filterkanten schräg zur Längsachse, also in Umfangsrichtung.

Zweckmäßig stellt die Außenseite des Filterelementes die Rohseite dar, die mit dem Ringraum kommuniziert. Gemäß einer alternativen Ausführung ist es aber auch möglich, dass die Außenseite des Filterelementes die Reinseite und das Innere des Filterelementes die Rohseite darstellt. In dieser Ausführung ist der Ringraum zwischen Außenmantel des Filterelementes und Innenmantel des Fluidrohrs vorteilhafterweise in Strömungsrichtung mit größer werdender Querschnittsfläche ausgebildet, um die radiale Durchströmung des Filterelementes von innen nach außen zu unterstützen. Das Fluidrohr stellt in dieser Ausführung das Reinfluidrohr dar.

### Kurze Beschreibung der Zeichnungen

Weitere Vorteile und zweckmäßige Ausführungen sind den weiteren Ansprüchen, der Figurenbeschreibung und den Zeichnungen zu entnehmen.
Es zeigen:
Fig. 1 eine schematische Darstellung einer Filtereinrichtung mit einem Filtergehäuse, das ein Rohfluidrohr umfasst, in dem ein schlauchförmiges Filterelement angeordnet ist, wobei der Querschnitt des Rohfluidrohrs sich in Strömungsrichtung konisch verjüngt und das Filterelement zylindrisch ausgebildet ist,
Fig. 2 eine weitere Filtereinrichtung, bei der sowohl das Filterelement als auch das Fluidrohr konisch ausgeführt sind, wobei in die Wandung des Fluidrohrs Stufen eingebracht sind,
Fig. 3 eine weitere, der Fig. 2 ähnliche Ausführung, bei der die Stufen des konischen Fluidrohres abgeflacht ausgebildet sind,
Fig. 4 eine weitere Ausführung, gemäß der das Filterelement konisch ausgeführt ist und in Strömungsrichtung einen sich verjüngenden Querschnitt und das Fluidrohr einen zylindrischen Querschnitt aufweist,
Fig. 5 eine weitere Ausführung, gemäß der das Fluidrohr zylindrisch und das Filterelement konisch ausgebildet ist, jedoch mit einem sich in Strömungsrichtung erweiternden Querschnitt,
Fig. 6 eine weitere Ausführung, gemäß der sowohl das Fluidrohr als auch das Filterelement konisch ausgeführt sind, die Wandung des Fluidrohres abgeflachte Stufen aufweist und die Wandung des Filterelementes ebenfalls stufenförmig ausgeführt ist,
Fig. 7 eine weitere Ausführung, gemäß der sowohl das Fluidrohr als auch das Filterelement konisch ausgeführt sind und jeweils glatte Wandungen aufweisen.

In den Figuren sind gleiche Bauteile mit gleichen Bezugszeichen versehen.

### Ausführungsformen der Erfindung

Die folgenden Ausführungsbeispiele beziehen sich auf Filtereinrichtungen zur Filtrierung von Verbrennungsluft in Brennkraftmaschinen. Allgemein können die Filtereinrichtungen aber zur Filtration von beliebigen Gasen eingesetzt werden. Darüber hinaus ist auch eine Anwendung bei der Filtration von Flüssigkeiten wie Kraftstoffen oder Ölen möglich.

Das Filterelement ist in den Ausführungsbeispielen als Filterschlauch aus einem weichen und nachgiebigen Material gefertigt, der radial von dem zu filtrierenden Fluid zu durchströmen ist. Der Filterschlauch zeichnet sich durch Flexibilität in Radialrichtung und auch in Axialrichtung aus.

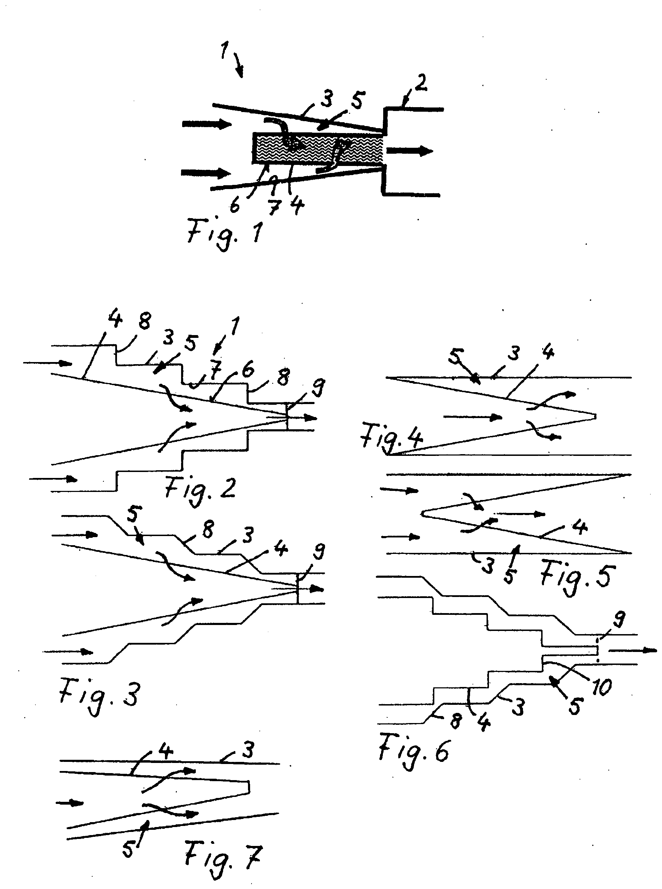

Die in Fig. 1 dargestellte nicht erfindungsgemäße Filtereinrichtung 1 umfasst ein allgemein mit Bezugszeichen 2 bezeichnetes Filtergehäuse, das ein Fluidrohr 3 umfasst, welches im gezeigten Ausführungsbeispiel als Rohfluidrohr bzw. Rohluftrohr zur Heranführung eines zu reinigenden Fluids, insbesondere Verbrennungsluft, ausgeführt ist. In dem Fluidrohr 3 ist ein Filterelement 4 angeordnet, welches hohlzylindrisch ausgebildet und von dem zu reinigenden Fluid radial von außen nach innen zu durchströmen ist. Die Außenseite des Filterelementes 4 stellt demnach die Rohseite dar, der Innenraum die Reinseite. Aus dem Innenraum des Filterelementes 4 wird das gereinigte Fluid in Achsrichtung axial abgeleitet. Die Strömungs- bzw. Achsrichtung ist mit den Pfeilen gekennzeichnet.

Das Fluidrohr 3 weist eine konische Querschnittsgeometrie auf, wobei sich in Achs- bzw. Strömungsrichtung der Querschnitt verjüngt. Das zylindrische Filterelement 4 besitzt einen kleineren Durchmesser als das Fluidrohr 3, so dass zwischen dem Außenmantel 6 des Filterelementes 4 und dem Innenmantel 7 des Fluidrohrs 3 ein Ringraum 5 gebildet ist, dessen Querschnittsfläche sich in Achsrichtung verjüngt. Der Außendurchmesser des zylindrischen Filterelementes 4 ist so gestaltet, dass dieser mit dem Durchmesser an der Stirnseite des konischen Fluidrohrs 3 übereinstimmt. Gegebenenfalls kommen aber auch kleinere Außendurchmesser für das Filterelement 4 in Betracht.

Das herangeführte, ungereinigte Fluid strömt in den Ringraum 5 ein, wobei der Druck im Fluid zunimmt, je schmaler die Querschnittsfläche des Ringraumes 5 wird. Dies unterstützt eine radiale Durchströmung der Filterwandung des Filterelementes 4. Die axiale Stirnseite im Bereich der Abströmung im Bereich des Filterelementes 4 kann offen ausgeführt sein.

Die in Fig. 2 dargestellte nicht erfindungsgemäße Filtereinrichtung stellt der Außenmantel 6 des Filterelementes 4 zugleich die Rohseite des Filterelementes dar, die mit dem Ringraum zwischen Außenmantel 6 und Innenmantel 7 des Fluidrohres kommuniziert, welches somit als Rohfluidrohr ausgeführt ist. Das Filterelement 4 besitzt eine konische Geometrie, die sich in Strömungsrichtung verjüngt. Die Wandungen des Filterelementes 4 sind glatt und faltenfrei ausgeführt oder aber in Form einer achsparallelen Faltenanordnung ausgeführt, die ebenfalls in eine konische Geometrie gebracht werden kann, indem die eine Seite der Falten mehr gerafft werden (kleinerer Durchmesser) als der andere Teil. Auch das Fluidrohr 3 besitzt eine grundsätzlich konische Geometrie, jedoch sind in die Wandung des Fluidrohres 3 Stufen 8 eingebracht, so dass sich der Ringraum 5 in Achsrichtung gesehen stufenförmig verjüngt. Außerdem ist der mittlere Konuswinkel des Fluidrohres 3 größer als der Konuswinkel des Filterelementes 4, wodurch auch ungeachtet der Stufen 8 eine Querschnittsverengung des Ringraumes 5 in Achsrichtung zustande kommt. Die Stirnseite am verjüngten Ende des konischen Filterelementes 4 stellt zugleich die Austrittsstelle für das gereinigte Fluid dar, über die das Fluid in einem Reinrohr des Gehäuses weitergeleitet wird. Um die Reinseite von der Rohseite im Gehäuse zu separieren, ist ebenfalls im Bereich der abströmnahen Stirnseite eine Trennwand 9 eingebracht.

Das Ausführungsbeispiel gemäß Fig. 3 entspricht weitgehend demjenigen nach Fig. 2. Auch bei Fig. 3 ist der Ringraum 5 zugleich die Rohseite, über die das herangeführte Fluid radial nach innen durch die Wandung des Filterelementes 4 geführt wird. Der Ringraum 5 verjüngt sich in Achsrichtung. Die Wandungen des konischen Filterelementes 4 sind glatt und eben ausgeführt, können aber auch in einer Faltung in Achsrichtung ausgeführt werden, die Wandung des Fluidrohres 3 dagegen mit Stufen 8 versehen, die aber im Unterschied zur vorhergehenden Filtervorrichtung abgeflacht verlaufen.

In den Filtervorrichtungen nach den Fig. 2 und 3 kann die Durchströmung auch in Gegenrichtung verlaufen, also bezogen auf die Zeichnungen von rechts nach links, wobei in diesem Fall auf die Trennwand 9 verzichtet werden würde, um eine Einströmung in den Ringraum 5 zu ermöglichen. Der Ringraum 5 stellt die Rohseite dar, von der ausgehend das Fluid die Filterwandung radial von außen nach innen durchströmt.

Im nicht erfindungsgemäßen Ausführungsbeispiel nach Fig. 4 stellt das Fluidrohr 3 mit dem Ringraum 5 das Reinrohr dar, über das das gereinigte Fluid abgeleitet wird. Das Fluidrohr 3 ist zylindrisch ausgeführt, das Filterelement 4 im Fluidrohr 3 dagegen konisch mit in Achsrichtung sich verjüngendem Querschnitt. Das ungereinigte Fluid wird in Pfeilrichtung über den Innenraum des Filterelementes 4 herangeführt der mit dem Rohluftraum kommuniziert bzw. diesen darstellt, wobei sich aufgrund des sich verjüngenden Querschnittes ein zunehmender Druck im Fluid aufbaut, der die Strömung des Fluids radial von innen nach außen durch die Filterwandung unterstützt.

Auch im nicht erfindungsgemäßen Ausführungsbeispiel nach Fig. 5 ist das Fluidrohr 3 zylindrisch und das Filterelement 4 konisch ausgebildet. Allerdings ist die Ausrichtung des Filterelementes 4 umgekehrt worden, die schmalste Stelle des Filterelementes 4 ist dem Zustrom an ungereinigtem Fluid zugewandt, d. h. der Querschnitt des Filterelementes 4 erweitert sich in Strömungsrichtung. Das Fluidrohr 3 stellt das Rohfluidrohr dar, über das das ungereinigte Fluid herangeführt wird. Der Ringraum 5 zwischen Außenmantel des Filterelementes 4 und Innenmantel des Fluidrohrs 3 verjüngt sich in Strömungsrichtung, wodurch die radiale Überströmung von außen nach innen in das Innere des Filterelementes 4 hinein unterstützt wird.

Fig. 6 stellt eine Kombination von konisch in Strömungsrichtung spitz zulaufendem Fluidrohr 3 und ebenfalls konisch in Strömungsrichtung spitz zulaufendem Filterelement 4 dar. In die Wandungen beider Bauteile sind Stufen 8 bzw. 10 eingebracht. Die Stufen 8 in der Wandung des Fluidrohrs 3 verlaufen abgeflacht, die Stufen 10 in der Wandung des Filterelementes 4 verlaufen steil im 90°-Winkel. Gegebenenfalls kann es sich bei den Stufen 10 im Filterelement 4 auch um Falten handeln, deren Faltenkanten zweckmäßig eine Komponente in Umfangsrichtung aufweisen oder aber um eine Aneinanderreihung von glatten, ebenen Teilebenen mit abnehmendem Durchmesser. Der Ringraum zwischen Außenmantel des Filterelementes 4 und Innenmantel des Fluidrohrs 3 kann sowohl den Reinraum als auch die Rohseite darstellen. Im Falle einer Ausführung als Reinraum wird das Rohfluid über den Innenraum des Filterelementes 4 herangeführt und durchströmt radial die Filterwandungen. Im Falle einer Ausführung als Reinseite wird das ungereinigte Fluid über diesen Ringraum herangeführt, wobei eine zusätzliche Trennwand 9 an der Stirnseite des Filterelementes 4 zur Separierung von Roh- und Reinseite vorgesehen ist.

In der nicht beanspruchten Ausführungsform nach Fig. 7 sind sowohl das Fluidrohr 3 als auch das Filterelement 4 konisch ausgebildet, beide Bauteile verjüngen sich in gleicher Achsrichtung. Allerdings weist das Filterelement 4 einen größeren Konuswinkel auf als das Fluidrohr 3, so dass in Strömungsrichtung gesehen der Ringraum 5 zwischen Filterelement 4 und Fluidrohr 3 einen zunehmenden Querschnitt besitzt. Die Durchströmung der Filtereinrichtung erfolgt über den axialen Innenraum des Filterelements, der die Rohseite darstellt; entsprechend bildet der Ringraum 5 die Reinseite. Sowohl das Fluidrohr 3 als auch das Filterelement 4 besitzen glatte Wandungen.

Die Filtereinrichtung eignet sich insbesondere für die Filtration von Verbrennungsluft in Brennkraftmaschinen. Es ist aber auch eine Anwendung für die Filtration der Fahrzeuginnenraumluft oder allgemein für die Filtration in Fahrzeugen möglich.

## Patentansprüche

1. Filtereinrichtung, insbesondere zur Filtration von Verbrennungsluft in Brennkraftmaschinen, mit einem in einem Filtergehäuse (2) angeordneten Filterelement (4), dessen Filterwandung die Roh- von der Reinseite radial separiert, wobei das Filterelement (4) schlauchförmig ausgebildet und in einem Fluidrohr (3) größeren Durchmessers angeordnet ist, wobei das schlauchförmig ausgebildete Filterelement eine konische Geometrie aufweist, die sich in Strömungsrichtung verjüngt, wobei der Ringraum (5) zwischen dem Außenmantel (6) des Filterelements (4) und dem Innenmantel (7) des Fluidrohrs (3) einen Strömungsraum für das Fluid bildet, und dass der Ringraum (5) in Achs- bzw. Strömungsrichtung eine sich ändernde Querschnittsfläche aufweist, **dadurch gekennzeichnet, dass** in die Wandung des Fluidrohrs (3) Stufen (8) eingebracht sind, so dass sich der Ringraum (5) in Achsrichtung gesehen stufenförmig verjüngt und die Stufen abgeflacht verlaufen.

2. Filtereinrichtung nach Anspruch 1, **dadurch gekennzeichnet, dass** die Querschnittsfläche des Ringraums (5) in Strömungsrichtung abnimmt.

3. Filtereinrichtung nach Anspruch 1 oder 2, **dadurch gekennzeichnet, dass** sowohl das Fluidrohr (3) als auch das Filterelement (4) einen in Achs- bzw. Strömungsrichtung nicht-konstanten Querschnitt aufweisen.

4. Filtereinrichtung nach einem der Ansprüche 1 bis 3, **dadurch gekennzeichnet, dass** die Wandung des Filterelements (4) glatt und frei von Falten ausgeführt ist.

5. Filtereinrichtung nach einem der Ansprüche 1 bis 3, **dadurch gekennzeichnet, dass** in die Wandung des Filterelements (4) Falten eingebracht sind.

6. Filtereinrichtung nach einem der Ansprüche 1 bis 5, **dadurch gekennzeichnet, dass** das Filterelement (4) als flexibler Filterschlauch ausgebildet ist.

7. Filtereinrichtung nach einem der Ansprüche 1 bis 6, **dadurch gekennzeichnet, dass** die Rohseite des Filterelements (4) mit dem Ringraum (5) kommuniziert.

8. Filtereinrichtung nach einem der Ansprüche 1 bis 6, **dadurch gekennzeichnet, dass** die Reinseite des Filterelements (4) mit dem Ringraum (5) kommuniziert.

9. Filtereinrichtung nach einem der Ansprüche 1 bis 8, **dadurch gekennzeichnet, dass** in die Wandung des Filterelements (4) Stufen eingebracht sind.

## Claims

1. Filter device, in particular for filtering combustion air in internal combustion engines, having a filter element (4) which is arranged in a filter housing (2) and whose filter wall radially separates the raw side from the clean side, the filter element (4) being of tubular design and being arranged in a fluid pipe (3) of larger diameter, the tubular filter element having a conical geometry which tapers in the flow direction, the annular space (5) between the outer jacket (6) of the filter element (4) and the inner jacket (7) of the fluid tube (3) forming a flow space for the fluid, and in that the annular space (5) has a changing cross-sectional area in the axial or flow direction, **characterized in that** steps (8) are introduced into the wall of the fluid tube (3), so that the annular space (5) tapers in a step-like manner when viewed in the axial direction and the steps extend in a detached manner.

2. Filter device according to claim 1, **characterized in that** the cross-sectional area of the annular space (5) decreases in the direction of flow.

3. Filter device according to claim 1 or 2, **characterized in that** both the fluid tube (3) and the filter element (4) have a cross-section which is non-constant in the axial or flow direction.

4. Filter device according to one of claims 1 to 3, **characterized in that** the wall of the filter element (4) is smooth and free of folds.

5. Filter device according to one of claims 1 to 3, **characterized in that** folds are introduced into the wall of the filter element (4).

6. Filter device according to one of claims 1 to 5, **characterized in that** the filter element (4) is designed as a flexible filter hose.

7. Filter device according to one of claims 1 to 6, **characterized in that** the raw side of the filter element (4) communicates with the annular space (5).

8. Filter device according to one of claims 1 to 6, **characterized in that** the clean side of the filter element (4) communicates with the annular space (5).

9. Filter device according to one of claims 1 to 8, **characterized in that** steps are introduced into the wall of the filter element (4).

## Revendications

1. Dispositif de filtrage, en particulier destiné à filtrer l'air de combustion dans des moteurs à combustion interne, comportant un élément filtrant (4) disposé dans un boîtier de filtre (2), et dont la paroi filtrante sépare radialement le côté brut du côté propre, l'élément filtrant (4) étant de forme tubulaire et disposé dans un tube à fluide (3) de diamètre supérieur, l'élément filtrant tubulaire présentant une géométrie conique qui s'amincit dans la direction d'écoulement, l'espace annulaire (5) entre l'enveloppe extérieure (6) de l'élément filtrant (4) et l'enveloppe intérieure (7) du tube à fluide (3) formant un espace d'écoulement du fluide, et l'espace annulaire (5) comportant une surface de section transversale variable dans la direction axiale ou d'écoulement, **caractérisé en ce que** des paliers (8) sont réalisés dans la paroi du tube à fluide (3), de sorte que l'espace annulaire (5) s'amincit par paliers dans la direction axiale et les paliers s'étendent de manière aplatie.

2. Dispositif de filtrage selon la revendication 1, **caractérisé en ce que** la surface de section transversale de l'espace annulaire (5) diminue dans la direction d'écoulement.

3. Dispositif de filtrage selon la revendication 1 ou 2, **caractérisé en ce que** le tube à fluide (3) ainsi que l'élément filtrant (4) comportent une section transversale non constante dans la direction axiale ou d'écoulement.

4. Dispositif de filtrage selon l'une des revendications 1 à 3, **caractérisé en ce que** la paroi de l'élément filtrant (4) est lisse et sans plis.

5. Dispositif de filtrage selon l'une des revendications 1 à 3, **caractérisé en ce que** des plis sont réalisés dans la paroi de l'élément filtrant (4).

6. Dispositif de filtrage selon l'une des revendications 1 à 5, **caractérisé en ce que** l'élément filtrant (4) est réalisé sous la forme d'un tube filtrant flexible.

7. Dispositif de filtrage selon l'une des revendications 1 à 6, **caractérisé en ce que** le côté brut de l'élément filtrant (4) communique avec l'espace annulaire (5).

8. Dispositif de filtrage selon l'une des revendications 1 à 6, **caractérisé en ce que** le côté propre de l'élément filtrant (4) communique avec l'espace annulaire (5).

9. Dispositif de filtrage selon l'une des revendications 1 à 8, **caractérisé en ce que** des paliers sont réalisés dans la paroi de l'élément filtrant (4).
